# EUROPÄISCHE PATENTSCHRIFT

(11) **EP 1 347 910 B1**
(45) Veröffentlichungstag und Bekanntmachung des Hinweises auf die Patenterteilung: **26.09.2007**
(21) Anmeldenummer: 01271300.4
(22) Anmeldetag: 13.12.2001
(51) Int. Cl.: B60T 13/74, B60T 8/88, B60T 8/00

(54) **ELEKTROMECHANISCHE BREMSZUSPANNEINRICHTUNG**
ELECTROMECHANICAL BRAKE APPLYING DEVICE
DISPOSITIF ELECTROMECANIQUE DE SERRAGE DE FREIN

(30) Priorität: 19.12.2000 DE 10063228; 12.02.2001 DE 10106377
(43) Veröffentlichungstag der Anmeldung: 01.10.2003
(73) Patentinhaber: KNORR-BREMSE Systeme für Schienenfahrzeuge GmbH, 80809 München (DE)
(72) Erfinder: FRIESEN, Ulf, 81739 München (DE)
(86) Internationale Anmeldenummer: PCT/EP2001/014680
(87) Internationale Veröffentlichungsnummer: WO 2002/049897

(56) Entgegenhaltungen:
- EP-A- 1 029 762
- WO-A-01/05638
- DE-A- 19 617 796
- DE-A- 19 906 227
- US-A- 4 546 298

## Beschreibung

### Stand der Technik

Die Erfindung geht aus von einer elektromechanischen Bremszuspanneinrichtung, insbesondere für eine Schienenfahrzeugbremse, nach der Gattung des Patentanspruchs 1.

Im wesentlichen werden derzeit im Schienenfahrzeugbereich drei Radbremssysteme eingesetzt : Pneumatische oder elektro-pneumatische Bremssysteme, hydraulische oder elektrohydraulische Bremssysteme sowie mechanische oder elektromechanische Brems-systeme. Das Radbremssystem kann dabei als aktives oder passives Bremssystem ausgeführt sein, je nachdem ob die Kraft des Bremsaktuators zum Einbremsen (aktives Bremssystem) oder zum Lösen der Bremse (passives Bremssystem) aufgebracht werden muß. Für den Fall von Betriebsstörungen erfolgt bei pneumatischen Systemen eine Energiespeicherung in Drückluftbehältern, bei hydraulischen Systemen in Hydrobehältern und bei elektromechanischen Systemen in Form von Speicherfedern.

Aus dem Stand der Technik sind elektromechanische Bremszuspanneinrichtungen bekannt, welche eine Betriebsbremseinheit sowie eine Speicherbremseinheit mit einem Energiespeicher aufweisen. Die Betriebsbremseinheit beinhaltet einen Bremskrafterzeuger zum Zuspannen und/oder Lösen der Bremse, beispielsweise in Form eines elektromotorischen Antriebs, welcher durch eine Regeleinrichtung zu schlupfgeregelten oder lastkorrigierten Bremsungen ansteuerbar ist. Die Speicherbremseinheit umfaßt mindestens einen Energiespeicher zum Speichern und Abgeben von Energie zum Zuspannen der Bremse als betriebliche Notbremse bei einer Sicherheitsbremsanforderung, als Park- oder Feststellbremse oder im Sinne einer unterlegten Sicherheitsebene bei Ausfall der Betriebsbremseinheit. Das Dokument DE19906227A1 beschreibt den Oberbegriff des Anspruchs 1.

Ein Kraftumsetzer sorgt für eine Umsetzung der vom Bremskrafterzeuger und/oder vom Energiespeicher abgegebenen Energie in eine Bremszuspannbewegung und umfaßt beispielsweise eine vom elektromotorischen Antrieb getriebene Bremsspindel.

Zur Aktivierung des Energiespeichers ist eine auf ein Sicherheits- und/oder ein Feststellbremsanforderungssignal hin entriegelbare Verriegelungseinrichtung vorgesehen. Die Speicherbremseinheit ist im allgemeinen als Federspeicherbremse ausgebildet, wobei die Speicherfeder durch die Verriegelungseinrichtung in gespanntem Zustand gehalten wird. Auf das Sicherheitsbremsanforderungssignal hin, welches beispielsweise über eine Sicherheitsschleife des Schienenfahrzeugs in die Verriegelungseinrichtung eingesteuert wird, wird diese gelöst und die Kraft der Speicherfeder kann mittels des Kraftumsetzers auf Bremsbacken übertragen werden.

Nachteilig ist jedoch, daß im Sicherheits- oder Feststellbremsfall bei intakter Bremszuspanneinrichtung kein gleitschutzgeregeltes oder lastkorrigiertes Einbringen der Bremskraft möglich ist, um auch bei Sicherheits- oder Feststellbremsungen einen gewissen Bremskomfort zu ermöglichen.

Der vorliegenden Erfindung liegt demgegenüber die Aufgabe zugrunde, eine elektromechanische Bremszuspanneinrichtung der eingangs erwähnten Art derart weiter zu entwickeln, daß auch im Sicherheits- und/oder Feststellbremsfall gleitschutzgeregelt und/oder lastkorrigiert gebremst werden kann.

Erfindungsgemäß wird diese Aufgabe durch die kennzeichnenden Merkmale von Anspruch 1 gelöst.

### Vorteile der Erfindung

Bei Anforderung der Sicherheits- oder Feststellbremse kann bei intakter Bremszuspanneinrichtung mit Hilfe der Betriebsbremseinheit und mit vollem Komfort, d.h. lastkorrigiert und schlupf- oder gleitschutzgeregelt gebremst werden. Das Einsteuern der Bremskraft wird dabei von der Steuer- und Überwachungseinrichtung überwacht. Diese verhindert bei korrekter Einsteuerung der Bremskraft (Bremszuspanneinrichtung intakt) das Öffnen der Verriegelungseinrichtung und damit im Sicherheitsbremsfall den bei Auslösung der Speicherbremseinheit häufig zu beobachtenden Bremsschlupf der Räder des Schienenfahrzeugs. Durch diese Maßnahme können der Fahrkomfort gesteigert und die mechanischen Belastungen und der Verschleiß des Bremssystems herabgesetzt werden.

Durch die in den Unteransprüchen aufgeführten Maßnahmen sind vorteilhafte Weiterbildungen und Verbesserungen der im Patentanspruch 1 angegebenen elektromechanischen Bremszuspanneinrichtung möglich.

Gemäß einer besonders zu bevorzugenden Maßnahme ist bei intakter Bremszuspanneinrichtung eine Zuführung des Sicherheits- und/oder Festellbremsanforderungssignals zur Verriegelungseinrichtung mittels einer von der Steuer- und Überwachungseinrichtung ansteuerbaren Schaltvorrichtung unterbindbar und stattdessen das Signal zum Verriegelthalten einsteuerbar.

Die Verriegelungseinrichtung ist vorzugsweise elektromagnetisch betätigbar ausgebildet, bestromt verriegelbar und unbestromt entriegelbar, wobei das Sicherheitsbremsanforderungssignal durch einen über eine Sicherheitsschleife des Schienenfahrzeugs einsteuerbaren stromlosen Zustand gebildet wird.

Die Schaltvorrichtung beinhaltet wenigstens ein Relais, welches die Verriegelungseinrichtung auf das Sicherheitsbremsanforderungssignal hin und bei intakter Bremszuspanneinrichtung mit einer Spannungsquelle verbindet. Eine Entriegelung der Speicherbremseinheit wird dann mit einfachen Mitteln zuverlässig verhindert.

Alternativ hierzu kann die Verriegelungseinrichtung mehrere Verriegelungselemente beinhalten, von welchen wenigstens ein Verriegelungselement zum Verriegelthalten der Verriegelungseinrichtung ausreichend ist, wobei bei intakter Bremszuspanneinrichtung von der Steuer- und Überwachungseinrichtung an dieses wenigstens eine Verriegelungselement das Signal zum Verriegelthalten der Verriegelungseinrichtung aussteuerbar ist.

Letzteres kann beispielsweise dadurch verwirklicht sein, daß die Verriegelungseinrichtung elektromagnetisch betätigbar ist und als Verriegelungselemente mehrere Magnetspulen zur Erzeugung von die Veriegelungseinrichtung ver- oder entriegelnden Magnetkräften beinhaltet, wobei die Magnetkraft wenigstens einer von der Steuer- und Überwachungseinrichtung ansteuerbaren Magnetspule zum Verriegelthalten der Verriegelungseinrichtung ausreichend ist. Bei Ausführung der Verriegelungseinrichtung mit einer Doppel- oder Mehrfachspule ist eine getrennte Ansteuerung der einzelnen Spulen in voneinander getrennten Stromkreisen, beispielsweise durch die Steuer- und Überwachungseinrichtung einerseits und durch eine Sicherheitsschleife des Schienenfahrzeugs andererseits möglich. Bei den Magnetspulen handelt es sich um Gleichteile, eine oder zwei zusätzliche Magnetspule(n) nehmen nur wenig mehr Platz ein, deshalb benötigt die beschriebene Lösung wenig Bauraum und ist kostengünstig realisierbar. Magnetspulen sind darüber hinaus unempfindlich gegenüber Stoß- und Schwingbelastungen, ihre Lebensdauer ist zudem hoch.

### Zeichnungen

Ausführungsbeispiele der Erfindung sind in den Zeichnungen dargestellt und in der ' nachfolgenden Beschreibung näher erläutert. Es zeigen :
Fig.1 eine stark schematisierte Darstellung einer bevorzugten Ausführungsform einer erfindungsgemäßen Bremszuspanneinrichtung;
Fig.2 eine Schnittdarstellung einer Verriegelungseinrichtung gemäß einer weiteren Ausführungsform der Bremszuspanneinrichtung.

### Beschreibung der Ausführungsbeispiele

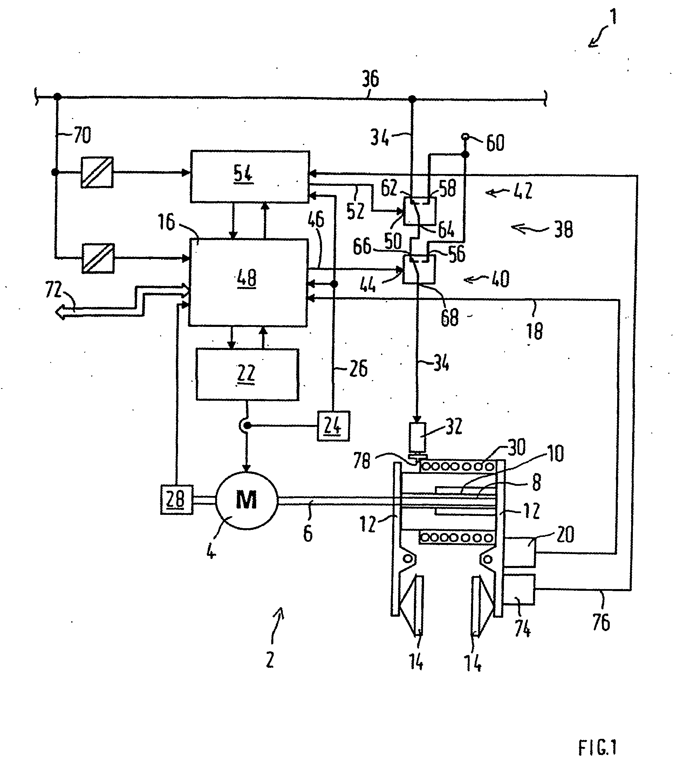

Die in Fig.1 insgesamt mit 1 bezeichnete und bevorzugte Ausführungsform einer elektromechanischen Bremszuspanneinrichtung eines Schienenfahrzeugs beinhaltet eine Betriebsbremseinheit mit einem Bremsaktuator 2, welcher eine von einem elektrischen Stellmotor 4 antreibbare Bremsspindel 6 umfaßt. Die Bremsspindel 6 ist von einer Mutter/Spindelbaueinheit 8 umfaßt, die vorzugsweise als Wälzegewindetrieb wie beispielsweise Kugelumlaufspindel, Rollengewindetrieb, Gewinderollenschraubtrieb oder als Planeten-Wälzgewindetrieb ausgebildet sein kann. Bei Drehungen der Bremsspindel 6 wird daher eine Mutter 10 der Mutter/Spindelbaueinheit 8 entlang der Bremsspindel 6 translatorisch geführt und wirkt dabei auf schwenkbar angelenkte Bremszangenhebel 12. Die Schwenkbewegungen der Bremszangenhebel 12 werden in im wesentlichen translatorische Bremszuspannbewegungen von Bremsbelägen 14 in Richtung einer nicht dargestellten Bremsscheibenachse gewandelt.

Die Betriebsbremseinheit ist zur Erzeugung von lastkorrigierten und/oder schlupfgeregelten Bremskräften ausgebildet, wobei unter einer lastkorrigierten Bremskraft eine im wesentlichen an das jeweils vorliegende Gewicht des Schienenfahrzeugs angepaßte Bremskraft und unter einer schlupfgeregelten Bremskraft eine Bremskraft verstanden werden soll, durch welche die Bremsung mit keinem oder nur wenig Radschlupf erfolgt. Hierzu ist eine Regeleinrichtung 16 vorgesehen, in welche mittels einer Signalleitung 18 von einem ersten Kraftsenor 20 ein Signal für den Bremskraft-Istwert einsteuerbar und dort mit einem Bremskraft-Sollwert zur Ermittlung einer Regeldifferenz vergleichbar ist. Die Bremskraft-Sollwertvorgabe orientiert sich vorzugsweise am Erreichen einer geforderten Bremskraft in möglichst kurzer Zeit.

Die Regeleinrichtung 16 steuert ein Leistungsteil 22 an, welches in Abhängigkeit der berechneten Regeldifferenz einen Betriebsstrom für den Stellmotor 4 aussteuert, welcher durch einen Stromsensor 24 gemessen wird, wobei ein entsprechendes Signal über eine Signalleitung 26 an die Regeleinrichtung 16 übermittelt wird. Der Aufbau der Bremskraft beginnt erst nach Durchlaufen eines Belagspiels. Ein Drehzahlsensor 28 dient als Positionssensor oder als Drehwinkelgeber für eine korrekte Regelung des Motors durch die Regeleinrichtung 16.

Im weiteren beinhaltet die Bremszuspanneinrichtung 1 eine Speicherbremseinheit mit einem Energiespeicher zum Speichern und Abgeben von Energie zum Zuspannen der Bremse im Sicherheits- oder Notbremsfall. Der Energiespeicher wird vorzugsweise durch eine als Schraubenfeder ausgebildete, zur Bremsspindel koaxiale Speicherfeder 30 gebildet, die in Bremslösestellung gespannt ist und sich mit ihrem dem Stellmotor 4 zugewandten Ende an einem Gehäuse des Bremsaktuators 2 und mit ihrem anderen Ende an einer aus Maßstabsgründen nicht dargestellten, koaxial zur Bremsspindel 6 verschiebbaren Schiebehülse abstützt, welche auf die Bremszangenhebel 12 wirkt und welche durch eine Verriegelungseinrichtung 32 in Lösestellung haltbar ist.

Die Verriegelungseinrichtung 32 steht über eine elektrische Leitung 34 mit einer Sicherheitsschleife 36 des Schienenfahrzeugs in Verbindung, an welcher durch Betätigung eines Notschlagknopfes oder Notbremshebels ein Sicherheitsbremsanforderungssignal anliegt. Der Sicherheitsschleife 36 und der Verriegelungseinrichtung 32 ist eine Schaltvorrichtung 38 zwischengeordnet, welche vorzugsweise zwei in Reihe hintereinander geschaltete Relais, ein erstes Relais 40 und ein zweites Relais 42 umfaßt. Alternativ kann jegliche andere Art von Schaltelement verwendet werden, beispielsweise Halbleiter, insbesondere Transistoren.

Das erste Relais 40 steht mit seinem Steuereingang 44 über eine elektrische Steuerleitung 46 mit einer in die Regeleinrichtung 16 integrierten Steuer- und Überwachungseinrichtung 48 in Verbindung, der Steuereingang 50 des zweiten Relais 42 ist mittels einer weiteren Steuerleitung 52 an eine weitere, redundante Steuer- und Überwachungseinrichtung 54 angeschlossen, welche mit der einen Steuer- und Überwachungseinrichtung 48 kommunizieren kann. Beide Relais 40, 42 stehen mit ihren einen Leistungseingängen 56, 58 mit einer Spannungsquelle 60 in Verbindung, ein weiterer Leistungseingang 62 des zweiten Relais 42 ist mit der Sicherheitsschleife 36 und dessen Ausgang 64 mit dem weiteren Leistungseingang 66 des ersten Relais 40 verbunden, von welchem ein Ausgang 68 über die elektrische Leitung 34 mit der Verriegelungseinrichtung 32 in Verbindung steht. Beide Relais 40, 42 schalten im unbestromtem Zustand die elektrische Leitung 34 zwischen der Verriegelungseinrichtung 32 und der Sicherheitsschleife 36 durch, wie in Fig.1 gezeigt ist. Die beiden Steuer- und Überwachungseinrichtungen 48, 54 können über elektrische Leitungen 70 Signale der Sicherheitsschleife 36 empfangen. Über eine Schnittstelle 72 gelangen Bremsanforderungssignale eines Bremssignalgebers zur Regeleinrichtung 16. Über die Schnittstelle kann außerdem eine Systemdiagnose erfolgen, zudem stellt sie eine Verbindung zu einer übergeordneten Steuerung dar.

Ein zweiter Kraftsensor 74 steht über eine Signalleitung 76 mit der redundanten Steuer- und Überwachungseinrichtung 54 in Verbindung. Die Ausgangssignale der beiden Kraftsensoren 20, 74 bilden als Eingangssignale für die Steuer- und Überwachungseinrichtungen 48, 54 und die Regeleinrichtung 16 außer für die Berechnung der Regeldifferenz notwendige Bremskraft-Istwerte zudem Kriterien für die Funktionsfähigkeit der Bremszuspanneinrichtung 1. Vorzugsweise erfolgt die Funktionsprüfung der Bremszuspanneinrichtung 1 durch die beiden Steuer- und Überwachungseinrichtungen 48, 54 online und ständig. Anstatt die Bremskraft direkt zu messen, können auch Sensoren zur Messung von physikalischen Größen vorgesehen sein, aus welchen die Bremskraft ableitbar ist.

Die Verriegelungseinrichtung 32 ist vorzugsweise elektromagnetisch betätigbar ausgebildet und umfaßt einen Verriegelungskolben 78, welcher bei bestromter Verriegelungseinrichtung 32 die Speicherfeder 30 in ihrer gespannten Lage verriegelt und bei unbestromter Verriegelungseinrichtung 32 die Speicherfeder 30 entriegelt, so daß die sich entspannende Speicherfeder 30 eine Bremszuspannbewegung der Bremsbeläge 14 hervorrufen kann.

Der Stellmotor 4 bildet einen Bremskrafterzeuger, die weiteren Elemente des Kraftübertragungsweges vom Stellmotor 4 bis zu den Bremsbelägen 14 bilden einen Bremskraftumsetzer. Vor diesem Hintergrund hat die Bremszuspanneinrichtung 1 gemäß der bevorzugten Ausführungsform folgende Funktion :

In der Lösestellung des Bremsaktuators 2 ist die Speicherfeder 30 gespannt. Die beiden Relais 40, 42 befinden sich in der in Fig.1 dargestellten Schaltstellung, in welcher die Verriegelungseinrichtung 32 mit der Sicherheitsschleife 36 elektrisch verbunden ist. Da die Sicherheitsschleife 36 im Normalbetrieb bestromt ist, befindet sich die Verriegelungseinrichtung 32 in verriegelter Stellung. Die Kraft der gespannten Speicherfeder 30 kann dann von der Verriegelungseinrichtung 32 abgestützt werden.

Beim Übergang von der Lösestellung zur einer Betriebsbremsstellung erhält die Regeleinrichtung 16 über ihre Schnittstelle 72 ein Bremsanforderungssignal, woraufhin der Stellmotor 4 über den Leistungsteil 22 angetrieben wird und die Bremsspindel 6 in Drehung versetzt, wodurch sich die Mutter 10 der Mutter/Spindelbaueinheit 8 entlang der Bremsspindel 6 schraubt und die Bremszangelhebel 12 gespreizt werden. Die Speicherfeder 30 ist bei der Erzeugung der Betriebsbremskraft nicht beteiligt und verbleibt in gespanntem Zustand, da sie durch die weiterhin bestromte Verriegelungseinrichtung 32 arretiert ist.

Bei Betätigung eines Notschlagknopfes oder eines Notbremshebels des Schienenfahrzeugs wird in der Sicherheitsschleife 36 ein Sicherheitsbremsanforderungssignal erzeugt, welches vorzugsweise durch eine Stromlosschaltung der Sicherheitsschleife 36 gebildet wird. Falls durch eine oder beide Steuer- und Überwachungseinrichtungen 48, 54 festgestellt wurde, daß die Bremszuspanneinrichtung 1 ohne Defekt ist, beispielsweise anhand der Bremskraft-Zeit-Verläufe vorangehender Bremsungen, werden die beiden Relais 40, 42 so umgeschaltet, daß die Verriegelungseinrichtung 32 durch die Spannungsquelle 60 bestromt wird. Infolgedessen bleibt die Verriegelungseinrichtung 32 trotz des an der Sicherheitsschleife 36 anliegenden Sicherheitsbremsanforderungssignals verriegelt und die Speicherfeder 30 kann sich nicht entspannen. Das durch Stromlosschaltung der Sicherheitsschleife 36 gebildete Sicherheitsbremsanforderungssignal wird demzufolge durch die mittels der Steuer- und Überwachungseinrichtungen 48, 54 hergestellten Stromversorgung der Verriegelungseinrichtung 32 überschrieben. Gleichzeitig wird durch die beiden über die Sicherheitsschleife 36 steuereingangsseitig stromlos gesetzten Steuer- und Überwachungseinrichtungen 48, 54 eine Betriebsbremsung ausgelöst, bei welcher mit Hilfe des Stellmotors 4 eine schlupfgesteuerte und/oder lastkorrigierte Bremskraft an den Bremsbelägen 14 erzeugt wird. Falls eine der beiden Steuer- und Überwachungseinrichtungen 48, 54 ausfällt, kann deren Funktion von der jeweils anderen übernommen werden. Insbesondere sind auch die beiden Relais 40, 42 so geschaltet, daß bei Ausfall eines Relais 40, 42 das jeweils andere Relais 40, 42 noch für eine elektrische Verbindung zwischen der Verriegelungseinrichtung 32 und der Spannungsquelle 60 sorgen kann.

Falls jedoch durch eine oder beide Steuer- und Überwachungseinrichtungen 48, 54 ein Defekt in der Bremszuspanneinrichtung 1 detektiert wird, erhalten die beiden Relais 40, 42 von den Steuer- und Überwachungseinrichtungen 48, 54 keine Umschaltsignale und verbleiben in ihrer in Fig.1 gezeigten Durchschaltstellung. Aufgrund der durch Betätigung des Notschlagknopfes stromlos geschalteten Sicherheitsschleife 36 wird auch der Verriegelungseinrichtung 32 kein Strom mehr zugeführt, so daß sie die Speicherfeder 30 entriegelt. Die Bremsung mit der Speicherbremseinheit erfolgt dann ohne Schlupfregelung und ohne Lastkorrektur.

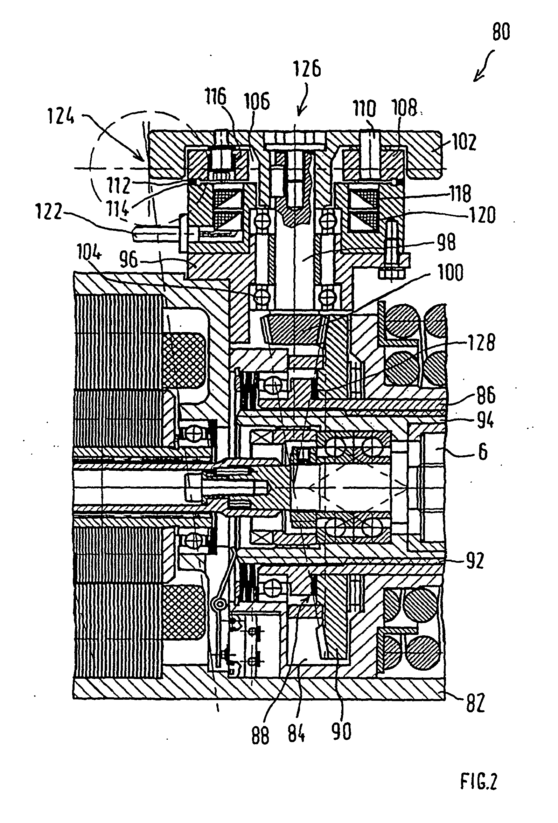

In Fig.2 ist eine Verriegelungseinrichtung 80 gemäß einer weiteren Ausführungsform der erfindungsgemäßen Bremszuspanneinrichtung 1 gezeigt. Die restlichen Komponenten der Bremszuspanneinrichtung 1 sind identisch bzw. analog den vorangehend beschriebenen. Die folgenden Ausführungen betreffen den Aufbau der Verriegelungseinrichtung 80.

In einem Aktuatorgehäuse 82 des Bremsaktuators 2 ist ein Ring-raum 84 ausgebildet, in welchem ein mit einer Verriegelungsmutter 86 durch eine Rutschkupplung 88 in treibender Verbindung stehendes Tellerrad 90 angeordnet ist. Die Verriegelungsmutter 86 ist mittels eines nicht-selbsthemmendes Gewindes 92 gegenüber einer in Richtung der Bremsspindel 6 verschieblichen Schiebehülse 94 drehbar, an welcher sich die Speicherfeder 30 abstützt und deren translatorische Ausfahrbewegung ein Schwenken der Bremszangelhebel 12 in Bremszuspannrichtung bewirkt. Die Verriegelungsvorrichtung 80 hat ein Gehäuse 96, das an einer radialen Öffnung des Ringraumes 84 angeflanscht ist. Die Verriegelungsvorrichtung 80 umfaßt außerdem eine Welle 98, an deren radial innerem Ende ein Kegelrad 100 und an deren gegenüberliegendem, radial äußerem Ende eine zylindrische Schwungscheibe 102 angeordnet ist. Das Kegelrad 100 kämmt mit der Verzahnung des Tellerrades 90 und bildet mit diesem ein Kegelradgetriebe, welches vorzugsweise ein relativ hohes Übersetzungsverhältnis aufweist. Die Welle 98 ist im Gehäuse 96 der Verriegelungsvorrichtung 80 durch Rillenkugellager 104 drehbar gelagert, wobei die Welle 98 senkrecht zur Bremsspindel 6 angeordnet ist.

Die Schwungscheibe 102 hat an ihrer zur Bremsspindel 6 weisenden Stirnfläche eine Ringausnehmung 106 für einen Ring 108, der koaxial zur Welle 98 angeordnet und entlang sich in axialer Richtung erstreckenden Zapfen 110 verschieblich aufgenommen ist, wodurch er mit der Schwungscheibe 102 drehfest verbunden ist. Der Ring 108 weist außerdem an seiner von der Schwungscheibe 102 weg weisenden Stirnfläche einen radial äußeren Zahnkranz 112 auf, welcher einem weiteren, sich am Gehäuse 96 der Verriegelungseinrichtung 80 abstützenden Zahnkranz 114 gegenüberliegt und durch die Wirkung von Druckfedern 116 von diesem weg gedrängt ist. Dem Ring 108 liegen im weiteren mehrere, vorzugsweise zwei im Gehäuse 96 der Verriegelungseinrichtung 80 in Axialrichtung hintereinander angeordnete Magnetspulen 118, 120 gegenüber, welche durch elektrische Anschlüsse 122 einzeln bestrombar sind. Der Ring 108, die beiden Zahnkränze 112, 114 und die beiden Magnetspulen 118, 120 bilden zusammen eine Magnetzahnbremse 124.

Bei wenigstens einer bestromten Magnetspule 118, 120 entstehen magnetische Anziehungskräfte, die den Ring 108 gegen die Wirkung der Druckfedern 116 entlang der Zapfen 110 in axialer Richtung auf die Magnetspulen 118, 120 zu bewegen, wodurch der Zahnkranz 112 des Ringes 108 mit dem am Gehäuse 96 der Verriegelungseinrichtung 80 gehaltenen Zahnkranz 114 in Eingriff kommt und somit eine drehfeste Verbindung mit diesem eingeht. Dann kann ein von der Speicherfeder 30 auf die Schiebehülse 94 wirkendes, über die Verriegelungsmutter 86 und das Tellerrad 90 in die Verriegelungsvorrichtung 80 eingeleitetes Drehmoment am Gehäuse 96 der Verriegelungsvorrichtung 80 abgestützt werden, wobei der Kraftfluß durch das Kegelrad 100, die Welle 98 und die Schwungscheibe 102 läuft. Die Magnetspulen 118, 120 wirken magnetisch gleichsinnig und sind so ausgelegt, daß die Magnetkraft einer einzigen Magnetspule 118, 120 ausreicht, um die Magnetzahnbremse 124 geschlossen zu halten.

Die vom Ring 108 weiter entfernt liegende Magnetspule 120 steht über die Anschlüsse 122 mit den in Fig.1 gezeigten Steuer- und Überwachungseinrichtungen 48, 54 in elektrisch leitender Verbindung und erhält von dieser Strom, während die dem Ring 108 näher gelegene Magnetspule 118 an die Sicherheitsschleife 36 angeschlossen ist. Alternativ ist auch eine umgekehrte Zuordnung möglich. Das bedeutet, daß die Magnetspule 118 im Falle der Stromlosschaltung der Sicherheitsschleife 36 bei einer Sicherheitsbremsung keinen Strom erhält und demzufolge auch keine Magnetkräfte zum Sperren der Magnetzahnbremse 124 erzeugt. Jedoch wird bei intakter Bremszuspanneinrichtung das durch Stromlosschaltung erzeugte Sicherheitsbrems-anforderungssignal überschrieben, indem die andere Magnetspule 120 durch die Steuer- und Überwachungseinrichtungen 48, 54 weiterhin unter Strom gesetzt bleibt, wobei die hierdurch gebildeten Magnetkräfte ausreichen, um die Magnetzahnbremse 124 und damit die Verriegelungseinrichtung 80 weiterhin verriegelt zu halten, so daß sich die Speicherfeder 30 nicht entspannen kann. Die Sicherheitsbremskraft wird dann in diesem Fall wie bei einer Betriebsbremsung durch den von der Regeleinrichtung 16 geregelten Stellmotor 4 erzeugt.

Zusätzlich oder alternativ wird bei intakter Bremszuspanneinrichtung 1 wenigstens eine der Magnetspulen der Magnetzahnbremse 124 durch die Steuer- und Überwachungseinrichtungen 48, 54 bestromt oder bleibt durch diese in bestromtem Zustand, wenn eine andere Magnetspule bei Vorliegen eines Feststellbremsanforderungssignals stromlos geschaltet wird. Die Feststellbremskraft wird dann auch in diesem Fall wie bei einer Betriebsbremsung durch den von der Regeleinrichtung 16 geregelten Stellmotor 4 erzeugt.

Um eine Verringerung der Verlustleistung zu erreichen, wird die von den Steuer- und Überwachungseinrichtungen 48, 54 angesteuerte Magnetspule 120 mit einem Haltestrom betrieben, der gerade groß genug ist, um die Magnetzahnbremse 124 geschlossen zu halten. Damit wird sowohl die Stromaufnahme als auch die innere Erwärmung der Bremszuspanneinrichtung 1 reduziert.

Falls jedoch die Bremszuspanneinrichtung 1 einen Defekt aufweist, wird auch die Magnetspule 120 stromlos geschaltet, so daß der Zahnkranz 112 des Ringes 108 durch die Wirkung der Druckfedern 116 mit dem am Gehäuse 96 der Verriegelungsvorrichtung 80 gehaltenen Zahnkranz 114 außer Eingriff kommt und infolgedessen sich das Tellerrad 90 zusammen mit dem Kegelrad 100, der Welle 98 und der Schwungscheibe 102 gegenüber dem Gehäuse 96 der Verriegelungsvorrichtung 80 frei drehen kann. Folglich kann sich die Verriegelungsmutter 86 entlang des nichtselbsthemmenden Gewindes 92 auf der Schiebehülse 94 drehen, welche durch die Speicherfeder 30 in Bremszuspannstellung gedrängt wird. Wie bei der vorangehend beschriebenen Ausführungsform erfolgt die durch die Speicherfeder 30 ausgelöste Sicherheitsbremsung ohne Schlupfregelung und ohne Lastkorrektur.

Die Schwungscheibe 102, der Ring 108, die Welle 98 und das Kegelrad 100 bilden zusammen eine senkrecht zur Bremsspindel 6 drehbare und bezogen auf die Rutschkupplung 88 jenseits der Verriegelungsmutter 86 angeordnete Schwungmasse 126, wobei der Anteil der Schwungscheibe 102 am Massenträgheitsmoment der Schwungmasse 126 aufgrund Ihres Radius am größten ist. Während der Bremszuspannbewegung wird die Rotation der Verriegelungsmutter 86 über das Kegelradgetriebe 90, 100 in eine mit höherer Drehzahl stattfindende Drehung der Schwungmasse 126 übersetzt, so daß ein großer Teil der potentiellen Energie der sich entspannenden Speicherfeder 30 in Rotationsenergie umgewandelt wird.

Mit Erreichen der Bremsstellung stoppt die Rotation der Verriegelungsmutter 86. Die Rutschkupplung 88 zwischen Verriegelungsmutter 86 und Tellerrad 90 ist derart ausgelegt, daß das obere Grenzdrehmoment, ab dem eine Relativdrehung zwischen Stirnverzahnungen 128 von Tellerrad 90 und Verriegelungsmutter 86 stattfinden kann, durch das Drehmoment aus dem Produkt des Massenträgheitsmoments der Schwungmasse 126 und der nach Durchlaufen des Brems-anlegehubes vorhandenen Verzögerung in Bremsendstellung überschritten wird, so daß die Schwungmasse 126 nach Erreichen der Bremsendstellung zunächst weiterdrehen kann und im wesentlichen durch die zwischen den Stirnverzahnungen 128 von Tellerrad 90 und Verriegelungsmutter 86 stattfindenden Reibung langsam zum Stillstand gebracht wird. Hierdurch kann ein allmählicher Abbau der in der Schwungmasse 126 gespeicherten Rotationsenergie stattfinden.

Zum Einlegen der Feststell -oder Parkbremse mit Hilfe der Speicherbremseinheit können sämtliche Magnetspulen 118, 120 durch geeignete Maßnahmen stromlos geschaltet werden, um die Verriegelungseinrichtung 80 zu lösen. Alternativ kann durch Umkehr des Stromflusses in einer oder in beiden Magnetspulen 118, 120 die Richtung der Magnetkräfte invertiert und damit die Magnetzahnbremse 124 geöffnet werden. Darüber hinaus kann eine weitere Magnetspule eingesetzt werden, die direkt über eine der Parkbremse zugeordnete Steuerleitung bestrombar ist und Magnetkräfte erzeugt, welche den Magnetkräften der beiden Magnetspulen 118, 120 entgegenwirken.

### Bezugszahlenliste

- 1: Bremszuspanneinrichtung
- 2: Bremsaktuator
- 4: Stellmotor
- 6: Bremsspindel
- 8: Mutter/Spindelbaueinheit
- 10: Mutter
- 12: Bremszangenhebel
- 14: Bremsbeläge
- 16: Regeleinrichtung
- 18: Signalleitung
- 20: Kraftsensor
- 22: Leistungsteil
- 24: Stromsensor
- 26: Signalleitung
- 28: Drehzahlsensor
- 30: Speicherfeder
- 32: Verriegelungseinrichtung
- 34: elektrische Leitung
- 36: Sicherheitsschleife
- 38: Schaltvorrichtung
- 40: Relais
- 42: Relais
- 44: Steuereingang
- 46: Steuerleitung
- 48: Steuer- und Überwachungseinrichtung
- 50: Steuereingang
- 52: Steuerleitung
- 54: redundante Steuer- und Überwachungseinrichtung
- 56: Leistungseingang
- 58: Leistungseingang
- 60: Spannungsquelle
- 62: Leistungseingang
- 64: Ausgang
- 66: Leistungseingang
- 68: Ausgang
- 70: elektrische Leitung
- 72: Schnittstelle
- 74: Kraftsensor
- 76: Signalleitung
- 78: Verriegelungskolben
- 80: Verriegelungseinrichtung
- 82: Aktuatorgehäuse
- 84: Ringraum
- 86: Verriegelungsmutter
- 88: Rutschkupplung
- 90: Tellerrad
- 92: nicht-selbsthemmendes Gewinde
- 94: Schiebehülse
- 96: Gehäuse Verriegelungseinrichtung
- 98: Welle
- 100: Kegelrad
- 102: Schwungscheibe
- 104: Rillenkugellager
- 106: Ringausnehmung
- 108: Ring
- 110: Zapfen
- 112: Zahnkranz
- 114: Zahnkranz
- 116: Druckfedern
- 118: Magnetspule
- 120: Magnetspule
- 122: elektrischer Anschluß
- 124: Magnetzahnbremse
- 126: Schwungmasse
- 128: Stirnverzahnungen.

## Patentansprüche

1. Elektromechanische Bremszuspanneinrichtung, insbesondere für eine Schienenfahrzeugbremse, beinhaltend :
a) Eine Betriebsbremseinheit (4,6) zur Erzeugung einer lastkorrigierten und/oder schlupfgeregelten Bremskraft,
b) eine Speicherbremseinheit mit einem Energiespeicher (30) zum Speichern und Abgeben von Energie zum Zuspannen der Bremse, und
c) eine entriegelbare Verriegelungseinrichtung (32; 80) für den Energiespeicher (30),
**dadurch gekennzeichnet, daß** wenigstens eine Steuer- und Überwachungseinrichtung (48, 54) zur Überwachung der Bremsfunktion der Bremszuspanneinrichtung (1) vorgesehen ist, durch welche bei intakter Bremszuspanneinrichtung (1) ein Signal zum Verriegelthalten der Verriegelungseinrichtung (32; 80) erzeugbar und auch im Sicherheits- und/oder Feststellbremsfall die Betriebsbremseinheit (4, 6) zum Zuspannen der Bremse aktivierbar ist.

2. Elektromechanische Bremszuspanneinrichtung nach Anspruch 1, **dadurch gekennzeichnet, daß** bei intakter Bremszuspanneinrichtung (1) Signale zum Verriegelthalten ständig an der Verriegelungseinrichtung (32; 80) anliegen und ein eventuell zum Entriegeln der Verriegelungseinrichtung (32; 80) erzeugtes Sicherheits-und/oder Feststellbremsanforderungssignal überschreiben.

3. Elektromechanische Bremszuspanneinrichtung nach Anspruch 1, **dadurch gekennzeichnet, daß** bei intakter Bremszuspanneinrichtung (1) eine Zuführung eines Sicherheits- und/oder Festellbremsanforderungssignals zur Verriegelungseinrichtung (32) mittels einer von der Steuer- und Überwachungseinrichtung (48) ansteuerbaren Schaltvorrichtung (38) unterbindbar und stattdessen das Signal zum Verriegelthalten einsteuerbar ist.

4. Elektromechanische Bremszuspanneinrichtung nach Anspruch 2 oder 3, **dadurch gekennzeichnet, daß** die Verriegelungseinrichtung (32) elektromagnetisch betätigbar ausgebildet, bestromt verriegelbar und unbestromt entriegelbar ist, wobei das Sicherheitsbremsanforderungssignal durch einen über eine Sicherheitsschleife (36) des Schienenfahrzeugs einsteuerbaren stromlosen Zustand gebildet wird.

5. Elektromechanische Bremszuspanneinrichtung nach Anspruch 3 oder 4, **dadurch gekennzeichnet, daß** die Schaltvorrichtung (38) wenigstens ein Relais (40, 42) beinhaltet, welches die Verriegelungseinrichtung (32) auf das Sicherheitsbremsanforderungssignal hin und bei intakter Bremszuspanneinrichtung (1) mit einer Spannungsquelle (60) verbindet.

6. Elektromechanische Bremszuspanneinrichtung nach einem der vorhergehenden Ansprüche, **dadurch gekennzeichnet, daß** die Verriegelungseinrichtung (80) mehrere Verriegelungselemente (118, 120) beinhaltet, von welchen wenigstens ein Verriegelungselement (120) zum Verriegelthalten der Verriegelungseinrichtung (80) ausreichend ist, wobei bei intakter Bremszuspanneinrichtung (1) von der Steuer- und Überwachungseinrichtung (48) an dieses wenigstens eine Verriegelungselement (120) das Signal zum Verriegelthalten der Verriegelungseinrichtung (80) aussteuerbar ist.

7. Elektromechanische Bremszuspanneinrichtung nach Anspruch 6, **dadurch gekennzeichnet, daß** die Verriegelungseinrichtung (80) elektro-magnetisch betätigbar ist und als Verriegelungselemente mehrere Magnetspulen (118, 120) zur Erzeugung von die Veriegelungseinrichtung (80) ver- oder entriegelnden Magnetkräften beinhaltet, wobei die Magnetkraft wenigstens einer von der Steuer- und Überwachungseinrichtung (48) ansteuerbaren Magnetspule (120) zum Verriegelthalten der Verriegelungseinrichtung (80) ausreichend ist.

8. Elektromechanische Bremszuspanneinrichtung nach einem der vorhergehenden Ansprüche, **dadurch gekennzeichnet, daß** die Steuer- und Überwachungseinrichtung (48) in eine Regeleinrichtung (16) zur Schlupfregelung und/oder Lastkorrektur der von der Betriebsbremseinheit (4, 6) erzeugten Bremskraft integriert ist.

9. Elektromechanische Bremszuspanneinrichtung nach Anspruch 8, **dadurch gekennzeichnet, daß** die Bremskraft vorzugsweise hinsichtlich Betrag und Wirkungsdauer von der Steuer- und Überwachungseinrichtung (48) ständig überwacht ist.

10. Elektromechanische Bremszuspanneinrichtung nach Anspruch 9, **dadurch gekennzeichnet, daß** die Regeleinrichtung (16) mit einem Sensor zur Messung von physikalischen Größen, aus denen die von der Betriebsbremseinheit (4, 6) erzeugte Bremskraft ableitbar ist, in Verbindung steht, vorzugsweise mit einem Kraftsensor (20).

11. Elektro-mechanische Bremszuspanneinrichtung nach Anspruch 10, **dadurch gekennzeichnet, daß** das Ausgangssignal des wenigstens einen Sensors (20) zugleich als Eingangssignal für die Steuer- und Überwachungseinrichtung (48) ein Kriterium für die Funktionsfähigkeit der Bremszuspanneinrichtung (1) bildet.

12. Elektro-mechanische Bremszuspanneinrichtung nach Anspruch 11, **dadurch gekennzeichnet, daß** eine weitere, redundante Steuer- und Überwachungseinrichtung (54) vorgesehen ist.

## Claims

1. Electromechanical brake application device, in particular for a rail vehicle brake, comprising:
a) a service brake unit (4, 6) for generating a load-corrected and/or slip-controlled braking force,
b) a storage brake unit with an energy storage (30) for storing and transmitting energy in order to apply the brake and
c) a releasable locking device (32; 80) for the energy storage (30), **characterised in that** at least one control and monitoring system (48, 54) is provided for monitoring the brake function of the brake application device (1), by means of which a signal can be generated to hold the locking device (32; 80) locked if the brake application device (1) is intact and the service brake unit (4, 6) can also be activated in a safety and/or parking brake situation in order to apply the brake.

2. Electromechanical brake application device as claimed in claim 1, **characterised in that** if the brake application device (1) is intact, signals are constantly applied to the locking device (32; 80) to remain locked and any safety and/or parking brake command signal which might be generated in order to unlock the locking device (32; 80) is overridden.

3. Electromechanical brake application device as claimed in claim 1, **characterised in that** if the brake application device (1) is intact, a safety and/or parking brake command signal can be prevented from being sent to the locking device (32) by means of a switching device (38) which can be activated by the control and monitoring device (48) and instead, the signal to remain locked is applied.

4. Electromechanical brake application device as claimed in claim 2 or 3, **characterised in that** the locking device (32) is of a design which can be electromagnetically operated and can be locked when supplied with power and unlocked in the powerless state, and the safety braking command signal is generated by a powerless state which can be initiated via a safety loop (36) of the rail vehicle.

5. Electromechanical brake application device as claimed in claim 3 or 4, **characterised in that** the switching device (38) contains at least one relay (40, 42) which connects the locking device (32) to a voltage source (60) in response to the safety braking command signal and if the brake application device (1) is intact.

6. Electromechanical brake application device as claimed in one of the preceding claims, **characterised in that** the locking device (80) contains several locking elements (118, 120), of which at least one locking element (120) is enough to hold the locking device (80) locked, and if the brake application device (1) is intact the signal to this at least one locking element (120) to hold the locking device (80) locked can be controlled by the control and monitoring system (48).

7. Electromechanical brake application device as claimed in claim 6, **characterised in that** the locking device (80) can be electromagnetically operated and contains several solenoids (118, 120) as locking elements for generating magnetic forces which lock or unlock the locking device (80), and the magnetic force of at least one of the solenoids (120) which can be activated by the control and monitoring system (48) is enough to hold the locking device (80) locked.

8. Electromechanical brake application device as claimed in one of the preceding claims, **characterised in that** the control and monitoring (48) system is integrated in a control unit (16) for a slip control and/or load correction of the braking force generated by the service brake unit (4, 6).

9. Electromechanical brake application device as claimed in claim 8, **characterised in that** the braking force is constantly monitored by the control and monitoring system (48), preferably in terms of amount and active duration.

10. Electromechanical brake application device as claimed in claim 9, **characterised in that** the control unit (16) is connected to a sensor for measuring physical variables from which the braking force generated by the service brake unit (4, 6) can be derived, preferably to a force sensor (20).

11. Electromechanical brake application device as claimed in claim 10, **characterised in that** the output signal of the at least one sensor (20) simultaneously serves as an input signal for the control and monitoring system (48) and a criterion for the functional capacity of the brake application device (1).

12. Electromechanical brake application device as claimed in claim 11, **characterised in that** another, redundant control and monitoring system (54) is provided.

## Revendications

1. Dispositif électromécanique de serrage de frein, en particulier pour un frein de véhicule ferroviaire, comprenant :
a) une unité de frein de service (4, 6) pour la production d'une force de freinage corrigée en charge et/ou régulée en patinage,
b) une unité de freinage par accumulation ayant un accumulateur d'énergie (30) pour accumuler et céder de l'énergie pour le serrage du frein, et
c) un dispositif de verrouillage (32 ; 80) déverrouillable pour l'accumulateur d'énergie (30),
**caractérisé en ce que** au moins un dispositif de commande et de contrôle (48, 54) est prévu pour contrôler la fonction de freinage du dispositif de serrage de frein (1), par lequel, quand le dispositif de serrage de frein (1) est intact, un signal de maintien du verrouillage du dispositif de verrouillage (32 ; 80) peut être produit, et l'unité de frein de service (4, 6) peut être activée pour le serrage du frein même en cas de freinage de sécurité et/ou d'arrêt.

2. Dispositif électromécanique de serrage de frein selon la revendication 1, **caractérisé en ce que**, quand le dispositif de serrage de frein (1) est intact, des signaux de maintien du verrouillage sont constamment présents au niveau du dispositif de verrouillage (32 ; 80) et écrasent un signal de demande de freinage de sécurité et/ou d'arrêt éventuellement produit pour déverrouiller le dispositif de verrouillage (32 ; 80).

3. Dispositif électromécanique de serrage de frein selon la revendication 1, **caractérisé en ce que**, quand le dispositif de serrage de frein (1) est intact, un acheminement d'un signal de demande de freinage de sécurité et/ou d'arrêt vers le dispositif de verrouillage (32) peut être éliminé au moyen d'un dispositif de commande (38) pouvant être piloté par le dispositif de commande et de contrôle (48), et au lieu de cela le signal de maintien du verrouillage peut être injecté.

4. Dispositif électromécanique de serrage de frein selon la revendication 2 ou 3, **caractérisé en ce que** le dispositif de verrouillage (32) est constitué de façon à pouvoir être actionné de façon électromécanique, de façon à pouvoir être verrouillé quand il est alimenté en courant et être déverrouillé quand il n'est pas alimenté en courant, le signal de demande de freinage de sécurité étant formé par un état sans courant pouvant être injecté par le biais d'une boucle de sécurité (36) du véhicule ferroviaire.

5. Dispositif électromécanique de serrage de frein selon la revendication 3 ou 4, **caractérisé en ce que** le dispositif de commande (38) comporte au moins un relais (40, 42) qui connecte le dispositif de verrouillage (32) en direction du signal de demande de freinage de sécurité et, quand le dispositif de serrage de frein (1) est intact, le connecte à une source de tension (60).

6. Dispositif électromécanique de serrage de frein selon une des revendications précédentes, **caractérisé en ce que** le dispositif de verrouillage (80) comporte plusieurs éléments de verrouillage (118, 120) dont au moins un élément de verrouillage (120) est suffisant pour le maintien du verrouillage du dispositif de verrouillage (80), le signal de maintien du verrouillage du dispositif de verrouillage (80) pouvant être réglé, quand le dispositif de serrage de frein (1) est intact, depuis le dispositif de commande et de contrôle (48) vers cet élément de verrouillage (120), au moins au nombre de un.

7. Dispositif électromécanique de serrage de frein selon la revendication 6, **caractérisé en ce que** le dispositif de verrouillage (80) peut être actionné de façon électromagnétique et a, en tant qu'éléments de verrouillage, plusieurs bobines magnétiques (118, 120) pour la production de forces magnétiques verrouillant ou déverrouillant le dispositif de verrouillage (80), la force magnétique d'au moins une bobine magnétique (120) pouvant être réglée par le dispositif de commande et de contrôle (48) étant suffisante pour le maintien du verrouillage du dispositif de verrouillage (80).

8. Dispositif électromécanique de serrage de frein selon une des revendications précédentes, **caractérisé en ce que** le dispositif de commande et de contrôle (48) est intégré dans un dispositif de régulation (16) pour la régulation du patinage et/ou la correction de charge de la force de freinage produite par l'unité de frein de service (4, 6).

9. Dispositif électromécanique de serrage de frein selon la revendication 8, **caractérisé en ce que** la force de freinage est de préférence contrôlée constamment par le dispositif de commande et de contrôle (48) en ce qui concerne sa valeur et sa durée d'action.

10. Dispositif électromécanique de serrage de frein selon la revendication 9, **caractérisé en ce que** le dispositif de régulation (16) est en liaison avec un capteur pour la mesure de grandeurs physiques à partir desquelles peut être dérivée la force de freinage produite par l'unité de frein de service (4, 6), de préférence avec un capteur de force (20).

11. Dispositif électromécanique de serrage de frein selon la revendication 10, **caractérisé en ce que** le signal de sortie du au moins un capteur (20) forme simultanément, en tant que signal d'entrée pour le dispositif de commande et de contrôle (48), un critère pour l'aptitude fonctionnelle du dispositif de serrage de frein (1).

12. Dispositif électromécanique de serrage de frein selon la revendication 11, **caractérisé en ce qu'**il est prévu un autre dispositif de commande et de contrôle (54) redondant.
